# EUROPEAN PATENT APPLICATION

(11) **EP 4 332 168 A1**
(43) Date of publication of application: **06.03.2024**
(21) Application number: 22794231.5
(22) Date of filing: 27.01.2022
(51) Int. Cl.: C08L 77/06, C08K 7/14, C08J 5/04

(54) **LONG-CARBON-CHAIN POLYAMIDE RESIN COMPOSITION AND CONTINUOUS FIBER REINFORCED LONG-CARBON-CHAIN POLYAMIDE COMPOSITE MATERIAL**

(30) Priority: 30.04.2021 CN 202110485573
(71) Applicant: Cathay Biotech Inc., Shanghai 201203 (CN); Cibt America Inc., Newark DE 19713 (US); Cathay (Taiyuan) Biomaterial Co., Ltd., Taiyuan, Shanxi 030199 (CN); Shanxi Synthetic Biology Institute Co., Ltd., Taiyuan, Shanxi 030001 (CN)
(72) Inventor: LI, Yuanping, Shanghai 201203 (CN); GUAN, Bing, Shanghai 201203 (CN); LIU, Xiucai, Shanghai 201203 (CN)
(74) Representative: karo IP
(86) International application number: PCT/CN2022/074303
(87) International publication number: WO 2022/227750

(57) **Abstract**

Disclosed are a long-carbon-chain polyamide resin composition and a continuous fiber reinforced long-carbon-chain polyamide composite material. The long-carbon-chain polyamide resin composition includes the following components in parts by weight: 81.8-99.8 parts of long-carbon-chain bio-based polyamide 5X resin, 0.2-1.6 parts of an antioxidant, 0-0.8 parts of a lubricant, 0-15 parts of a compatibilizer, and 0-0.8 parts of a coupling agent. The continuous fiber reinforced long-carbon-chain polyamide composite material prepared on the basis of the long-carbon-chain polyamide resin composition has high fiber content and good mechanical properties, is recyclable and can be used in fields of aerospace, military, automotive materials, sports equipment, building materials, electronic appliances, etc.

## Description

### Technical Field

The invention relates to a long-carbon-chain polyamide resin composition, a continuous fiber reinforced long-carbon-chain polyamide composite material, a preparation method and use thereof.

### Background

In contrast to thermoset materials, thermoplastic materials do not need to be cross-linked and cured, can be processed multiple times for molding. The molding process is more convenient and efficient, so thermoplastic materials have maintained stable and sustainable development in recent years, especially fiber reinforced thermoplastic materials. The matrix resin of the fiber reinforced thermoplastic materials can be polypropylene, polyamide, polyester, etc., and the fibers can be glass fiber, carbon fiber, aramid fiber, etc., among which glass fiber is more commonly used.

Fiber reinforced thermoplastic materials mainly includes short fiber (2-4 mm) reinforced thermoplastic materials, long fiber (12-24 mm) reinforced thermoplastic materials, fiber felt reinforced thermoplastic materials, continuous fiber reinforced thermoplastic materials and thermoplastic composite material core plates. Short fiber reinforced thermoplastic materials cannot meet the performance requirements of structural materials due to their poor strength, so long fiber reinforced thermoplastic materials have been developed. The reinforcement effect of continuous fibers on thermoplastic materials is better than that of short and long fibers, significantly improving mechanical properties and fatigue resistance. Therefore, the research has been active in recent years. Continuous fiber reinforced thermoplastic materials were primarily focused on aerospace and military applications in the early stages, and have gradually been applied in industries such as automotive materials, sports equipment, construction and the like since 2003. With the development of industries such as automobiles and electronics, the demand for continuous fiber reinforced thermoplastic materials will also increase. Therefore, accelerating the development and promotion of continuous fiber reinforced thermoplastic materials is of great significance.

Continuous fiber reinforced thermoplastic materials can be stored for a long time, with excellent comprehensive performance, wide forming adaptability, high production efficiency, and products that can be repeatedly processed and recycled. Therefore, since its development in the early 1970s, research has been very active. Research on continuous fiber reinforced thermoplastic materials began in China in the late 1980s. The preparation techniques of continuous fiber reinforced thermoplastic materials mainly include: (1) solution impregnation technology, (2) melt coating technology, (3) suspension impregnation technology, (4) co-woven fibers, (5) powder impregnation technology, and (6) melt impregnation process. Technologies (1)-(5) have limited their widespread application in industrial production due to production processes, production costs, production efficiency, and other reasons. Melt impregnation process is a process in which fiber bundles are impregnated by pulling them out of the resin in a molten state under a certain tension through a designed impregnation mold. This process has a simple molding process, no environmental pollution, and the most promising prospects for industrialization.

However, the melt impregnation process requires the resin in the molten state to have lower viscosity, higher surface tension, and good wettability with fibers. However, most thermoplastic materials on the market have a high viscosity of the matrix resin, which leads to poor flowability and permeability during the molding process, making it difficult to impregnate and disperse fibers, resulting in low fiber content and poor mechanical properties in continuous fiber reinforced composite materials. This limits the application of matrix resin in continuous fiber reinforced composite materials.

### Summary

The invention provides a long-carbon-chain polyamide resin composition, a continuous fiber reinforced long-carbon-chain polyamide composite material, and a preparation method and use thereof, in order to solve the defects of low fiber content and poor mechanical properties of continuous fiber reinforced composite materials in the prior art. The long-carbon-chain polyamide resin composition of the invention has low viscosity, good flowability, and good wettability to fibers in a molten state. The continuous fiber reinforced long-carbon-chain polyamide composite material based on the long-carbon-chain polyamide resin composition has high fiber content, good mechanical properties, and recyclability.

In order to achieve the above-mentioned object, the invention adopts the following technical solution.

According to the first technical solution, the long-carbon-chain polyamide resin composition comprises the following components in parts by weight: 81.8-99.8 parts of a long-carbon-chain bio-based polyamide 5X resin, 0.2-1.6 parts of an antioxidant, 0-0.8 parts of a lubricant, 0-15 parts of a compatilizer and 0-0.8 parts of a coupling agent.

The long-carbon-chain bio-based polyamide 5X resin refers to pentanediamine and/or long-carbon-chain diacid as raw material monomers prepared by biological fermentation.

Preferably, the long-carbon-chain diacid is selected from one or more of sebacic acid, undecanedioic acid, dodecanedioic acid, tridecanedioic acid, tetradecanedioic acid, pentadecanedioic acid, hexadecanedioic acid, heptadecanedioic acid and octadecanedioic acid.

Preferably, the long-carbon-chain bio-based polyamide 5X resin is selected from one or more of PA510, PA511, PA512, PA513, PA514, PA515, PA516, PA517 and PA518.

Preferably, the PA510 raw material monomers are pentanediamine and sebacic acid prepared by biological fermentation. The PA511 raw material monomers are pentanediamine and undecanedioic acid prepared by biological fermentation. The PA512 raw material monomers are pentanediamine and dodecanedioic acid prepared by biological fermentation. The PA513 raw material monomers are pentanediamine and tridecanedioic acid prepared by biological fermentation. The PA514 raw material monomers are pentanediamine and tetradecanedioic acid prepared by biological fermentation. The PA515 raw material monomers are pentanediamine and pentadecanedioic acid prepared by biological fermentation. The PA516 raw material monomers are pentanediamine and hexadecanedioic acid prepared by biological fermentation. The PA517 raw material monomers are pentanediamine and heptadecanedioic acid prepared by biological fermentation. The PA518 raw material monomers are pentanediamine and octadecanedioic acid prepared by biological fermentation.

In the invention, the long-carbon-chain bio-based polyamide 5X resin can be available from Cathay (Jinxiang) Biomaterials Co., Ltd.

Preferably, the long-carbon-chain bio-based polyamide 5X resin meets one or more of the following properties: a relative viscosity of 1.8-2.7, preferably 2.1-2.6; a terminal amino group content of 40-60mmol/kg, further 42-60mmol/kg; a melting point of 170°C-320°C, preferably 180-230°C; and/or a bio-based content of 43%-100%.

The bio-based content refers to the content of structural units corresponding to monomers prepared from biomass raw materials in polyamide. The biomass is a variety of organisms formed by photosynthesis. For example, one of the monomers of polyamide 56, pentanediamine, can be obtained by decarboxylation of lysine from corn fermentation. The bio-based content is determined by the standard method ASTM D6866.

Preferably, the long-carbon-chain bio-based polyamide 5X resin has a moisture content of 2000 ppm or less, a number average molecular weight of 40 to 55 kg/mol, and/or a molecular weight distribution of 1.8 to 2.1.

The relative viscosity is determined by the concentrated sulfuric acid method using an Ubbelohde viscometer. The terminal amino content is obtained by dissolving the sample with trifluoroethanol and titrating with a hydrochloric acid standard solution and a sodium hydroxide standard solution, respectively, and then calculating the results. Unless otherwise specified, the number of parts in the invention is based on weight or mass parts.

In the invention, the content of the long-carbon-chain bio-based polyamide 5X resin is preferably 90-95 parts by weight.

In the invention, the antioxidant may be selected from one or more of hindered phenol antioxidants, hindered amine antioxidants and phosphite ester antioxidants. It is preferably a combination of the hindered amine antioxidants and the phosphite eater antioxidants. The hindered phenolic antioxidant may be conventional in the art, such as Antioxidant 1010. The hindered amine antioxidant may be conventional in the art, such as Antioxidant 1098 (CAS 23128-74-7). The phosphite ester antioxidant may be conventional in the art, such as Antioxidant 168 (CAS 31570-04-4), or Antioxidant S9228.

Preferably, the antioxidant is selected from one or more of Antioxidant 168, Antioxidant 1098, Antioxidant 1010 and Antioxidant S9228, more preferably, the antioxidant is a combination of Antioxidant 168 and Antioxidant 1098. The mass ratio of Antioxidant 168 to Antioxidant 1098 is preferably 1: 1.

In the invention, the content of the antioxidant is preferably 0.4-0.8 parts, such as 0.4 parts, 0.5 parts or 0.6 parts.

In the invention, the lubricant may include an external lubricant and an internal lubricant. The mass ratio of the external lubricant to the internal lubricant is preferably 1: 1.

The external lubricant may be conventional in the art, such as WAXC available from Colein Corporation of Germany. The internal lubricant may be conventional in the art, such as WAXE available from Colein Corporation of Germany.

In the invention, the content of the lubricant is preferably 0.1 to 0.8 parts, such as 0.3 parts, 0.4 parts or 0.5 parts.

In the invention, the compatilizer can be selected from one or more of polyolefin grafted maleic anhydride compatilizers, polyolefin grafted methacrylic acid compatilizers and rubber elastomer grafted maleic anhydride compatilizers. The polyolefin grafted maleic anhydride compatibilizer can be conventional in the art, such as PP-g-MAH (maleic anhydride grafted onto polypropylene) or POE-g-MAH (maleic anhydride grafted onto ethylene octene copolymer). The polyolefin-graft-methacrylic compatibilizer may be conventional in the art, such as POE-g-GMA (glycidyl methacrylate grafted onto ethylene octene copolymer). The rubber elastomer grafted maleic anhydride compatibilizer may be conventional in the art, such as EPDM-g-MAH (maleic anhydride grafted onto EPDM).

In the invention, the amount of the compatibilizer is preferably 3-15 parts, more preferably 4-10 parts, such as 4 parts, 5 parts, 8 parts, 10 parts or 12 parts.

In the invention, the coupling agent may be selected from one or more of silane coupling agents, carbonate coupling agents and aluminate coupling agents. It is preferably the silane coupling agent, such as coupling agent KH550, coupling agent KH560 or coupling agent KH570. The coupling agent is generally selected according to the composition and surface structure of the fiber used and the melting point of the long-carbon-chain bio-based polyamide 5X resin.

In the invention, the amount of the coupling agent is preferably 0.1-0.8 parts, for example 0.3 parts, 0.4 parts or 0.5 parts.

In the invention, optionally, the long-carbon-chain polyamide resin composition further includes an end capping polyamide 5X oligomer. The number average molecular weight of the polyamide 5X oligomer is preferably 500-10,000 g/mol, more preferably 750-5000 g/mol. the end capping polyamide 5X oligomer can increase the flowability of the long-carbon-chain polyamide resin composition.

In the invention, optionally, the long-carbon-chain polyamide resin composition further includes one or more of a nucleating agent, a mineral salt powder and a flame retardant. The nucleating agent may be, for example, nucleating agent BRUGGOLEN P22 produced by Brugmann in Germany.

In some embodiments, the long-carbon-chain polyamide resin composition includes the following components in parts by weight: 90-95 parts of long-carbon-chain bio-based polyamide 5X resin, 0.4-0.6 parts of antioxidant, 0.3-0.5 parts of lubricant, 4-8 parts of compatilizer and 0.4-0.5 parts of coupling agent.

In some embodiments, the long-carbon-chain polyamide resin composition includes the following components in parts by weight: 90-95 parts of long-carbon-chain bio-based polyamide 5X resin, 0.4-0.6 parts of antioxidant, 0.3-0.5 parts of lubricant, 4-8 parts of compatilizer and 0.4-0.5 parts of coupling agent. The antioxidant is one or more of Antioxidant 168, Antioxidant 1098, Antioxidant 1010 and Antioxidant S9228. The lubricant is WAXC and WAXE. The compatilizer is selected from one or more of polyolefin grafted maleic anhydride compatilizers, polyolefin grafted methacrylic acid compatilizers and rubber elastomer-grafted-maleic anhydride compatilizers. The coupling agent is a silane coupling agent.

In a specific embodiment, the long-carbon-chain polyamide resin composition includes the following components in parts by weight: 94.5 parts of PA510, 0.3 parts of Antioxidant 1098, 0.3 parts of Antioxidant 168, 0.2 parts of internal lubricant WAXE, 0.2 parts of external lubricant WAXC, 4 parts of compatilizer POE-g-MAH and 0.5 parts of coupling agent KH550.

In a specific embodiment, the polyamide resin composition includes the following components in parts by weight: 94.6 parts of bio-based polyamide resin PA511, 0.25 parts of Antioxidant 1098, 0.25 parts of Antioxidant 168, 0.2 parts of internal lubricant WAXE, 0.2 parts of external lubricant WAXC, 4 parts of compatilizer EPDM-g-MAH and 0.4 parts of coupling agent KH560.

In a specific embodiment, the polyamide resin composition includes the following components in parts by weight: 92.8 parts of bio-based polyamide resin PA512, 0.25 parts of Antioxidant 1098, 0.25 parts of Antioxidant 168, 0.15 parts of internal lubricant WAXE, 0.15 parts of external lubricant WAXC, 6 parts of compatilizer EPDM-g-MAH and 0.4 parts of coupling agent KH550.

In a specific embodiment, the long-carbon-chain polyamide resin composition includes the following components in parts by weight: 92.5 parts of PA513, 0.3 parts of Antioxidant 1098, 0.3 parts of AAntioxidant 168, 0.2 parts of internal lubricant WAXE, 0.2 parts of external lubricant WAXC, 6 parts of compatilizer POE-g-MAH and 0.5 parts of coupling agent KH550.

In a specific embodiment, the long-carbon-chain polyamide resin composition includes the following components in parts by weight: 90.5 parts of PA514, 0.3 parts of Antioxidant 1098, 0.3 parts of Antioxidant 168, 0.2 parts of internal lubricant WAXE, 0.2 parts of external lubricant WAXC, 8 parts of compatilizer POE-g-MAH and 0.5 parts of coupling agent KH550.

In a specific embodiment, the long-carbon-chain polyamide resin composition includes the following components in parts by weight: 94.6 parts of PA515, 0.2 parts of Antioxidant 1098, 0.2 parts of Antioxidant 168, 0.2 parts of internal lubricant WAXE, 0.2 parts of external lubricant WAXC, 4 parts of compatilizer POE-g-MAH and 0.6 parts of coupling agent KH550.

In a specific embodiment, the long-carbon-chain polyamide resin composition includes the following components in parts by weight: 92.6 parts of PA516, 0.3 parts of Antioxidant 1098, 0.3 parts of Antioxidant 168, 0.2 parts of internal lubricant WAXE, 0.2 parts of external lubricant WAXC, 6 parts of compatilizer POE-g-MAH and 0.4 parts of coupling agent KH550.

In the invention, the long-carbon-chain polyamide resin composition can be prepared using conventional methods in the art, generally by uniformly mixing each component. The mixing can be carried out in conventional mixing equipment in the art, such as a high-speed mixer.

According to the second technical solution, a continuous fiber reinforced long-carbon-chain polyamide composite material includes the long-carbon-chain polyamide resin composition and fibers. The mass percentage of the fibers in the continuous fiber reinforced long-carbon-chain polyamide composite material is 40% -75%.

In the disclosure, "long fiber" refers to fibers with a length greater than 12mm, such as fibers with a length of approximately 12-24mm. "Continuous fiber" and "continuous long fiber" are interchangeable.

In the invention, the mass percentage of the fibers in the continuous fiber reinforced long-carbon-chain polyamide composite material is preferably 50-70%, such as 50%, 55%, 60%, 62%, 65%, 67%.

In the invention, the types of fibers may be conventional in the art, such as carbon fibers, glass fibers, basalt fibers or aramid fibers. The fibers are preferably continuous long fibers, preferably continuous long glass fibers. The monofilament diameter of the continuous long glass fiber can be 8-15 µm, preferably 8-10 µm. The linear density of the continuous long glass fiber is 1000-3600Tex, preferably 1200 Tex and 2400 Tex. The continuous long glass fibers, for example, are 1200Tex continuous long glass fibers available from Owens Corning (OC) and 2400Tex continuous long glass fibers available from Ju Shi.

Preferably, the fibers are continuous long carbon fibers. The continuous long carbon fibers are preferably polyacrylonitrile carbon fibers. The number of monofilaments of the continuous long carbon fibers are 20000 to 30000, preferably 12,000 (12K), 24000 (24K). And/or the diameter of the monofilament of the continuous long carbon fiber is 5-10 µm, preferably 6-8 µm. The continuous long carbon fibers are, for example, TORAY T700 with a specification of 24K, and Guangwei Composites continuous long carbon fibers 700S with a specification of 12K or 24K.

In the invention, preferably, the continuous fiber reinforced long-carbon-chain polyamide composite material is in the form of unidirectional prepreg tape. The unidirectional prepreg tape is a tape-shaped prepreg prepared by impregnating parallel continuous fibers with resin.

In the invention, preferably, the thickness of the continuous fiber reinforced long-carbon-chain polyamide composite material is 0.15-0.5 mm.

In the invention, when the fibers are continuous long glass fibers, the continuous fiber reinforced long-carbon-chain polyamide composite material meets one or more of the following parameters:
a tensile strength of 800-1300 MPa, preferably 850-1200 MPa;
a tensile modulus of 30-50 GPa, preferably 30-40 GPa; and
an elongation at break of 2.8-3.4%.

In the invention, when the fibers are continuous long carbon fibers, the continuous fiber reinforced long-carbon-chain polyamide composite material meets one or more of the following parameters: a tensile strength of 1400-1800 MPa, a tensile modulus of 80-100 GPa, and an elongation at break of 2.6-3.1%.

According to the third technical solution, a preparation method of the continuous fiber reinforced long-carbon-chain polyamide composite material includes the following steps of:
S1, extruding the long-carbon-chain polyamide resin composition, and subjecting the extruded melt into an impregnation die;
S2, introducing the fibers into the impregnation die to impregnate the fibers with the melt;
S3, molding, cooling, drawing and winding the impregnated fibers, to obtain the continuous fiber reinforced long-carbon-chain polyamide composite material.

The mass percentage of the continuous fibers in the continuous fiber reinforced polyamide composite material is controlled to be 40%-75% by adjusting the speed of the extruding and the speed of the winding.

In the invention, preferably, the mass percentage of the continuous fibers in the continuous fiber reinforced long-carbon-chain polyamide composite material is 50-70%, such as 50%, 55%, 60%, 62%, 65%, 67%.

In the step S1, the extruding can be carried out by a conventional twin-screw extruder or a single-screw extruder in the art, preferably a twin-screw extruder. The aspect ratio of the twin-screw extruder is preferably 1:36.

In the step S1, the extruding temperature may be 170-340 °C.

When a twin-screw extruder is used, the twin-screw extruder adopts an eight-zone heating mode, and preferably, the temperatures of the first zone to the eighth zone are 195-250 °C, 255-300 °C, 255-300 °C, 255-300 °C, 255-300 °C, 255-300 °C, 255-300 °C, and 275-310 °C in sequence.

In the step S1, represented by the screw speed, the extruding speed is 200-600rpm, such as 300 rpm, 400 rpm.

In the step S1, the step of filtering is preferably carried out after extruding. The step of filtering can be carried out by a conventional melt filter in the art. Preferably, when using a twin-screw extruder, the temperature of the melt filter is in the range of 0-35 °C above and below the eighth zone temperature of the twin-screw extruder, further in the range of 0-25 °C, more further in the range of 0-15 °C, such as 245 °C, 285 °C, 290 °C, or 320 °C.

In the step S1, the impregnation die can be a conventional die in the art, and the width of the impregnation die is preferably 100-650 mm.

The temperature of the impregnation die can be 260-330 °C, preferably, when a twin-screw extruder is used, the temperature of the impregnation die is in the range of 0-35 °C above and below the eighth zone temperature of the twin-screw extruder, further in the range of 0-25 °C, more further in the range of 0-15 °C, such as 250 °C, 290 °C, 295 °C, 305 °C or 330 °C

In the step S2, when the fibers are continuous long fibers, the introducing includes the following steps: unwinding the fibers from the yarn-passing guide by a tension controller, passing through a yarn splitting frame, spreading the fibers in the yarn spreading system, preheating the fibers in the yarn drying device, and soaking in the impregnation die.

When the fibers are continuous long glass fibers, the temperature of the yarn drying device is preferably 70-90 °C, such as 80 °C, or 85 °C. When the fibers are continuous long carbon fibers, the temperature of the yarn drying device is preferably 70-400 °C, such as 80 °C, 100 °C, 250 °C, 300 °C, or 350 °C.

In the step S2, the continuous fibers are as described above.

In the step S3, the molding and cooling can be carried out by a conventional roller press, preferably a four-roller press. The temperature of the internal circulating water of the four-roller press can be 60-90 °C, such as 70 °C, 80 °C.

In the step S3, the drawing can be carried out by a conventional drawing device in the art, further cooling and trimming are carried out in the drawing device. The drawing speed of the drawing can be 5-15 m/min, such as 8 m/min.

In the step S3, the winding can be carried out by a conventional winding device in the art, preferably an automatic winder.

In the invention, the continuous fiber reinforced long-carbon-chain polyamide composite material prepared by the preparation method of the continuous fiber reinforced long-carbon-chain polyamide composite material is preferably in the form of a unidirectional prepreg tape.

In the invention, the thickness of the continuous fiber reinforced long-carbon-chain polyamide composite material prepared by the preparation method of the continuous fiber reinforced long-carbon-chain polyamide composite material is preferably 0.15-0.5 mm.

According to the fourth technical solution, a molded article includes the continuous fiber reinforced long-carbon-chain polyamide composite material.

According to the fifth technical solution, the continuous fiber reinforced long-carbon-chain polyamide composite material can be used in fields of aerospace, military, automotive materials, sports equipment, building materials, electronic appliances.

On the basis of the common knowledge in the art, the above preferred conditions can bearbitrarily combined to obtain various preferred embodiments of the invention.

The reagents and raw materials used in the invention are commercially available.

The progressive effects of the invention are:
1. The long-carbon-chain bio-based polyamide 5X resin as the raw material in the present patent:
   (1) The monomer pentanediamine or long-chain diacid as the raw materials is prepared by biological fermentation, with a biomass content ranging from 43% to 100%, the biomass content is high, which conforms to the concept of sustainable development of material sources;
   (2) The long-carbon-chain polyamide resin composite prepared from the long-carbon-chain bio-based polyamide in the invention has low viscosity, good flowability, and good wettability to fibers in a molten state;
   (3) It expands the range of material selection and reduces costs.
2. The continuous fiber reinforced long-carbon-chain polyamide composite material in the invention:
   (1) The content of fibers is high, within the range of 40% -75%;
   (2) It has excellent mechanical properties;
   (3) The fibers are evenly distributed, without any exposed fibers, and it is easy to process;
   (4) The thickness of the composite material can be set between 0.15 and 0.5mm as needed, providing more design freedom for the product;
   (5) The final formed product containing the continuous fiber reinforced long-carbon-chain polyamide composite material described in the invention can be recycled and reused, with high resource utilization rate.
3. The preparation method of the continuous fiber reinforced long-carbon-chain polyamide composite material of the invention is simple and practical.

### BRIEF DESCRIPTION OF THE DRAWINGS

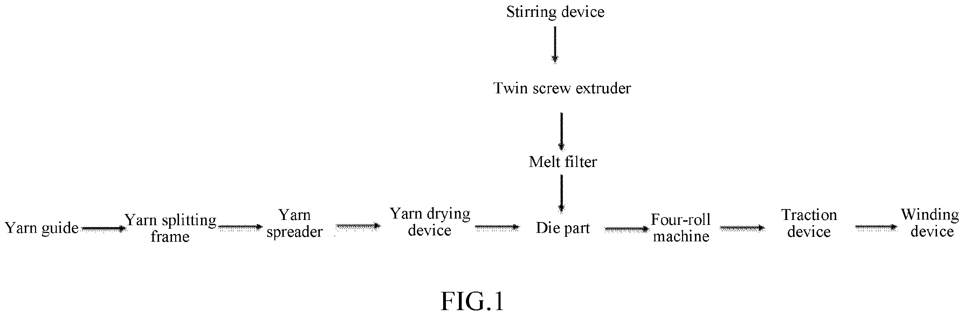

FIG. 1 is a process flow diagram for preparing a continuous fiber reinforced long-carbon-chain polyamide composite material according to an embodiment of the invention.

### DETAIL DESCRIPTION

The invention is further illustrated by way of examples, but the invention is not therefore limited to the scope of the examples. Experimental methods that do not specify specific conditions in the following examples are selected according to conventional methods and conditions, or according to the specification of the product.

In the following examples and comparative examples: long-carbon-chain bio-based polyamide 5X resins PA510, PA511, PA512, PA513, PA514, PA515 and PA516 were all available from Cathay (Jinxiang) Biomaterials Co. Ltd.. Antioxidants were available from BASF Group, Germany. WAXE and WAXC were available from Clariant, Germany. The compatilizer was available from Shanghai Jiayirong Polymer Co., Ltd.. The coupling agent was available from Hangzhou Jesica Chemical Co., Ltd.. Continuous long glass fibers were available from Owens Corning (OC) with a specification of 1200Texd. The continuous long carbon fibers were Toray T700 with a specification of 24K.

The preparation process of continuous fiber reinforced long-carbon-chain polyamide composite materials in the following examples and comparative examples is shown in fig. 1.

### Example 1

### 1. Preparation of Long-carbon-chain Polyamide Resin Composition

The polyamide 510 resin composition of the example included the following components in parts by weight: 94.5 parts of PA510 (the melting point of 217 °C, the relative viscosity of 2.51, the terminal amino group content of 54 mmol/kg), 0.3 parts of Antioxidant 1098, 0.3 parts of Antioxidant 168, 0.2 parts of internal lubricant WAXE, 0.2 parts of external lubricant WAXC, 4 parts of compatilizer POE-g-MAH, and 0.5 parts of coupling agent KH550. The components were mixed in a high-speed stirrer to obtain polyamide 510 resin composition.

### 2. Preparation of Continuous Fiber Reinforced Polyamide 510 Composite Material

S1, extruding the polyamide 510 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 290 °C. The temperature of the impregnation die was 305 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fibers and the polyamide 510 resin composition was 60: 40. The prepared continuous long glass fiber reinforced polyamide composite material was a unidirectional prepreg tape with performance parameters shown in Table 1.

### Example 2

### 1. Preparation of Long-carbon-chain Polyamide Resin Composition

The polyamide 511 resin composition of the example included the following components in parts by weight: 94.6 parts of PA511 (the melting point of 209 °C, the relative viscosity of 2.47, the terminal amino group content of 52 mmol/kg), 0.25 parts of Antioxidant 1098, 0.25 parts of Antioxidant 168, 0.3 parts of internal lubricant WAXE, 0.2 parts of external lubricant WAXC, 4 parts of compatilizer EPDM-g-MAH, and 0.4 parts of coupling agent KH550. The components were mixed in a high-speed stirrer to obtain polyamide 511 resin composition.

### 2. Preparation of Continuous Fiber Reinforced Polyamide 511 Composite Material

S1, extruding the polyamide 511 resin composition by a twin-screw extruder, filtering the extruded melt through a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 290 °C. The temperature of the impregnation die was 290 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C, and soaking in the impregnation die, in which the continuous long glass fibers were impregnated with the melt.

S3, molding and cooling the impregnated continuous long glass fibers by a four-roller machine, wherein the temperature of circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fiber to the polyamide 511 resin composition was 62: 38. The prepared continuous long glass fiber reinforced polyamide composite material was a unidirectional prepreg tape with performance parameters shown in Table 1.

### Example 3

### 1. Preparation of Long-carbon-chain Polyamide Resin Composition

The polyamide 512 resin composition of the example included the following components in parts by weight: 92.8 parts of PA512 (the melting point of 210 °C, the relative viscosity of 2.32, the terminal amino group content of 56 mmol/kg), 0.25 parts of Antioxidant 1098, 0.25 parts of Antioxidant 168, 0.15 parts of internal lubricant WAXE, 0.15 parts of external lubricant WAXC, 6 parts of compatilizer EPDM-g-MAH, 0.4 parts of coupling agent KH550. The components were mixed in a high-speed stirrer to obtain polyamide 512 resin composition.

### 2. Preparation of Continuous Fiber Reinforced Polyamide 512 Composite Material

S1, extruding the polyamide 512 resin composition by a twin-screw extruder, filtering the extruded melt by a melt filter, and introducing an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 290 °C. The temperature of the impregnation die was 295 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fibers and the polyamide 512 resin composition was 67: 33. The prepared continuous long glass fiber reinforced polyamide composite material was a unidirectional prepreg tape with performance parameters shown in Table 1.

### Example 4

### 1. Preparation of Long-carbon-chain Polyamide Resin Composition

The polyamide 513 resin composition of the example included the following components in parts by weight: 92.5 parts of PA513 (the melting point of 197 °C, the relative viscosity of 2.38, the terminal amino group content of 41 mmol/kg), 0.3 parts of Antioxidant 1098, 0.3 parts of Antioxidant 168, 0.2 parts of internal lubricant WAXE, 0.2 parts of external lubricant WAXC, 6 parts of compatilizer POE-g-MAH, 0.5 parts of coupling agent KH550. The components were mixed in a high-speed stirrer to obtain polyamide 513 resin composition

### 2. Preparation of Continuous Fiber Reinforced Polyamide 513 Composite Material

S1, extruding the polyamide 513 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 290 °C. The temperature of the impregnation die was 295 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fibers and the polyamide 513 resin composition was 65: 35. The prepared continuous long glass fiber reinforced polyamide composite material was a unidirectional prepreg tape with performance parameters shown in Table 1.

### Example 5

### 1. Preparation of Long-carbon-chain Polyamide Resin Composition

The polyamide 514 resin composition used in this example included the following components in parts by weight: 90.5 parts of PA514 (the melting point 205 °C, the relative viscosity 2.29, the terminal amino group content of 48 mmol/kg), 0.3 parts of Antioxidant 1098, 0.3 parts of Antioxidant 168, 0.2 parts of internal lubricant WAXE, 0.2 parts of external lubricant WAXC, 8 parts of compatilizer POE-g-MAH, 0.5 parts of coupling agent KH550. The components were mixed in a high-speed stirrer to obtain polyamide 514 resin composition

### 2. Preparation of Continuous Fiber Reinforced Polyamide 514 Composite Material

S1, extruding the polyamide 514 resin composition by a twin-screw extruder, filtering the extruded melt by filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 290 °C. The temperature of the impregnation die of 300 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fibers and the polyamide 514 resin composition was 65: 35. The prepared continuous long glass fiber reinforced polyamide composite material was a unidirectional prepreg tape with performance parameters shown in Table 1.

### Example 6

### 1. Preparation of Long-carbon-chain Polyamide Resin Composition

The polyamide 515 resin composition of the example included the following components in parts by weight: 94.6 parts of PA515 (the melting point 191 °C, the relative viscosity 2.25, the terminal amino group content 51mmol/kg),0.2 part of Antioxidant 1098, 0.2 part of Antioxidant 168, 0.2 part of internal lubricant WAXE, 0.2 part of external lubricant WAXC, 4 parts of compatilizer POE-g-MAH and 0.6 part of coupling agent KH550. The components were mixed in a high-speed stirrer to obtain the polyamide 515 resin composition.

### 2. Preparation of Continuous Fiber Reinforced Polyamide 515 Composite Material

S1, extruding the polyamide 515 resin composition by a twin-screw extruder, filtering the extruded melt through a melt filter, and introducing an impregnation die; Wherein:
The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 290 °C. The temperature of the impregnation die was 305 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fibers and the polyamide 515 resin composition was 65: 35. The prepared continuous long glass fiber reinforced polyamide composite material was a unidirectional prepreg tape with performance parameters shown in Table 1.

### Example 7

### 1. Preparation of Long-carbon-chain Polyamide Resin Composition

The polyamide 516 resin composition used in this example included the following components in parts by weight: 92.6 parts of PA516 (the melting point 192 °C, the relative viscosity 2.13, the terminal amino group content 47 mmol/kg), 0.3 parts of Antioxidant 1098, 0.3 parts of Antioxidant 168, 0.2 parts of internal lubricant WAXE, 0.2 parts of external lubricant WAXC, 6 parts of compatilizer POE-g-MAH and 0.4 parts of coupling agent KH550. The components were mixed in a high-speed stirrer to obtain polyamide 516 resin composition

### 2. Preparation of Continuous Fiber Reinforced Polyamide 516 Composite Material

S1, extruding the polyamide 516 resin composition by a twin-screw extruder, filtering the extruded melt through a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 290 °C. The temperature of the impregnation die was 295 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fibers and the polyamide 516 resin composition was 60: 40. The prepared continuous long glass fiber reinforced polyamide composite material was a unidirectional prepreg tape with performance parameters shown in Table 1.

### Example 8

The long-carbon-chain polyamide 510 resin composition was prepared by the same method as that of Example 1, and the continuous fiber reinforced polyamide 510 composite material was prepared by using the continuous long carbon fibers.

S1, extruding the polyamide 510 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 285 °C. The temperature of the impregnation die was 295 °C.

S2, unwinding the continuous long carbon fibers from the yarn-passing guide by a tension controller, passing through a yarn splitting frame, spreading the fibers in the yarn spreading system to fully spread each yarn, preheating the fibers in the yarn drying device with a set temperature of 305 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long carbon fibers and the polyamide 510 resin composition was 56: 44. The prepared continuous long carbon fiber reinforced polyamide composite material was a unidirectional prepreg tape with performance parameters shown in Table 1.

### Example 9

The long-carbon-chain polyamide 511 resin composition was prepared by the same method as that of Example 2, and the continuous fiber reinforced polyamide 511 composite material was prepared by using the continuous long carbon fibers.

S1, extruding the polyamide 511 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 285 °C. The temperature of the impregnation die was 295 °C.

S2, unwinding the continuous long carbon fibers from the yarn-passing guide by a tension controller, passing through a yarn splitting frame, spreading the fibers in the yarn spreading system to fully spread each yarn, preheating the fibers in the yarn drying device with a set temperature of 300 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long carbon fibers and the polyamide 511 resin composition was 52: 48. The prepared continuous long carbon fiber reinforced polyamide composite material was a unidirectional prepreg tape with performance parameters shown in Table 1.

### Example 10

### 1. Preparation of Long-carbon-chain Polyamide Resin Composition

The polyamide 512 resin composition of the example included the following components in parts by weight: 92.5 parts of PA512 (the melting point 210 °C, the relative viscosity 2.32, the terminal amino group content 56 mmol/kg), 0.3 parts of Antioxidant 1098, 0.3 parts Antioxidant 168, 0.2 parts internal lubricant WAXE, 0.2 parts external lubricant WAXC, 6 parts compatilizer EPDM-g-MAH and 0.5 parts coupling agent KH550. The components were mixed in a high-speed stirrer to obtain polyamide 512 resin composition.

### 2. Preparation of Continuous Fiber Reinforced Polyamide 512 Composite Material

S1, extruding the polyamide 512 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 285 °C. The temperature of the impregnation die was 295 °C.

S2, unwinding the continuous long carbon fibers from the yarn-passing guide by a tension controller, passing through a yarn splitting frame, spreading the fibers in the yarn spreading system to fully spread each yarn, preheating the fibers in the yarn drying device with a set temperature of 250 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long carbon fibers and the polyamide 512 resin composition was 55: 45. The prepared continuous long carbon fiber reinforced polyamide composite material was a unidirectional prepreg tape with performance parameters shown in Table 1.

### Example 11

The long-carbon-chain polyamide 513 resin composition was prepared by the same method as that of Example 4, and the continuous fiber reinforced polyamide 513 composite material was prepared by using the continuous long carbon fibers.

S1, extruding the polyamide 513 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 285 °C. The temperature of the impregnation die was 295 °C.

S2, unwinding the continuous long carbon fibers from the yarn-passing guide by a tension controller, passing through a yarn splitting frame, spreading the fibers in the yarn spreading system to fully spread each yarn, preheating the fibers in the yarn drying device with a set temperature of 350 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long carbon fibers and the polyamide 513 resin composition was 60: 40. The prepared continuous long carbon fiber reinforced polyamide composite material was a unidirectional prepreg tape with performance parameters shown in Table 1.

### Example 12

The long-carbon-chain polyamide 514 resin composition was prepared by the same method as that of Example 5, and the continuous fiber reinforced polyamide 514 composite material was prepared by using the continuous long carbon fibers

S1, extruding the polyamide 514 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 285 °C. The temperature of the impregnation die was 295 °C.

S2, unwinding the continuous long carbon fibers from the yarn-passing guide by a tension controller, passing through a yarn splitting frame, spreading the fibers in the yarn spreading system to fully spread each yarn, preheating the fibers in the yarn drying device with a set temperature of 300 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long carbon fibers and the polyamide 514 resin composition was 59: 41. The prepared continuous long carbon fiber reinforced polyamide composite material was a unidirectional prepreg tape with performance parameters shown in Table 1.

### Example 13

The long-carbon-chain polyamide 515 resin composition was prepared by the same method as that of Example 6, and the continuous fiber reinforced polyamide 515 composite material was prepared by using the continuous long carbon fibers.

S1, extruding the polyamide 514 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 285 °C. The temperature of the impregnation die was 295 °C.

S2, unwinding the continuous long carbon fibers from the yarn-passing guide by a tension controller, passing through a yarn splitting frame, spreading the fibers in the yarn spreading system to fully spread each yarn, preheating the fibers in the yarn drying device with a set temperature of 300 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long carbon fibers and the polyamide 515 resin composition was 63: 37. The prepared continuous long carbon fiber reinforced polyamide composite material was a unidirectional prepreg tape with performance parameters shown in Table 1.

### Example 14

The long-carbon-chain polyamide 516 resin composition was prepared by the same method as that of Example 7, and the continuous fiber reinforced polyamide 516 composite material was prepared by using the continuous long carbon fibers.

S1, extruding the polyamide 516 resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 210 °C, 270 °C, 270 °C, 270 °C, 270 °C, 270 °C, 280 °C in sequence.

The screw speed was 400 rpm. The aspect ratio of the twin-screw extruder was 1: 36.

The temperature of the melt filter was 285 °C. The temperature of the impregnation die was 295 °C.

S2, unwinding the continuous long carbon fibers from the yarn-passing guide by a tension controller, passing through a yarn splitting frame, spreading the fibers in the yarn spreading system to fully spread each yarn, preheating the fibers in the yarn drying device with a set temperature of 300 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long carbon fibers and the polyamide 516 resin composition was 57: 63. The prepared continuous long carbon fiber reinforced polyamide composite material was a unidirectional prepreg tape with performance parameters shown in Table 1.

### Comparative example 1

### 1. Preparation of Polyamide Resin Composition

The polyamide 6 resin composition of the comparative example included the following components in parts by weight: 92.5 parts of polyamide PA6 (available from Xinhui Meida, the melting point of 223 °C, the relative viscosity of 2.46, the terminal amino group content of 54 mmol/kg), 0.3 parts of Antioxidant 1098, 0.3 parts of Antioxidant 168, 0.2 parts of internal lubricant WAXE, 0.2 parts of external lubricant WAXC, 6 parts of compatilizer POE-g-MAH and 0.5 parts of coupling agent KH550. The components were mixed in a high-speed stirrer to obtain polyamide resin 6 composition.

### 2. Preparation of Continuous Fiber Reinforced Polyamide 6 Composite Material

S1, extruding the polyamide resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 200 °C, 220 °C, 245 °C, 245 °C, 245 °C, 245 °C, 245 °C, 245 °C in sequence.

The screw speed was 400 rpm. The aspect ratio of the twin-screw extruder was 1: 36.

The temperature of the melt filter was 250 °C. The temperature of the impregnation die was 250 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure the weight part ratio of the continuous long glass fibers to the polyamide resin 6 composition of 64: 36. The prepared continuous long glass fiber reinforced polyamide resin 6 composite material was a unidirectional prepreg tape with performance parameters shown in Table 1.

### Comparative example 2

The a long-carbon-chain polyamide 6 resin composition was prepared by the same method as that of Comparative Example 1, and the continuous fiber reinforced polyamide 6 composite material was prepared by using the continuous long carbon fibers.

S1, extruding the polyamide resin composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 200 °C, 220 °C, 245 °C, 245 °C, 245 °C, 245 °C, 245 °C, and 245 °C in sequence.

The screw speed was 400 rpm. The aspect ratio of the twin-screw extruder was 1: 36.

The temperature of the melt filter was 245 °C. The temperature of the impregnation die was 250 °C.

S2, unwinding the continuous long carbon fibers by a tension controller, from a yarn-passing guide, passing through a yarn splitting frame, spreading the fibers in the yarn spreading system to fully spread each yarn, preheating the fibers in the yarn drying device with a set temperature of 350 °C and soaking in the impregnation die, in which the continuous long carbon fibers were impregnated with the melt.

S3, molding and cooling the impregnated continuous long carbon fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure the weight part ratio of the continuous long carbon fibers to the polyamide resin 6 composition of 51: 49. The prepared continuous long carbon fiber reinforced polyamide resin 6 composite material was a unidirectional prepreg tape with performance parameters shown in Table 1.

### Comparative example 3

### 1. Preparation of Polyamide Resin Composition

The polyamide 12 resin composition of the comparative example included the following components in parts by weight: 92.5 parts of polyamide PA12 (available from Wanhua Chemical, the melting point of 180 °C, the relative viscosity of 2.17, the terminal amino group content of 49 mmol/kg), 0.3 parts of Antioxidant 1098, 0.3 parts of Antioxidant 168, 0.2 parts of internal lubricant WAXE, 0.2 parts of external lubricant WAXC, 6 parts of compatilizer POE-g-MAH and 0.5 parts of coupling agent KH550. The components were mixed in a high-speed stirrer to obtain polyamide resin 12 composition.

### 2. Preparation of Continuous Fiber Reinforced Polyamide 12 Composite Material

S1, extruding the polyamide resin 12 composition by a twin-screw extruder, filtering the extruded melt by a melt filter, and introducing it into an impregnation die.

The twin-screw extruder was in an eight-zone heating mode, and the temperatures from the first zone to the eighth zone (in the direction from feed to machine head) were 220 °C, 280 °C, 280 °C, 280 °C, 280 °C, 280 °C, and 290 °C in sequence.

The screw speed was 400 rpm. The aspect ratio of the twin-screw extruder was 1: 36.

The temperature of the melt filter was 295 °C. The temperature of the impregnation die was 295 °C.

S2, unwinding the continuous long glass fibers from the yarn-passing guide by a tension controller, passing through a yarn splitting frame, spreading the fibers in the yarn spreading system to fully spread each yarn, preheating the fibers in the yarn drying device with a set temperature of 85 °C and soaking in the impregnation die, in which the continuous long glass fibers were impregnated with the melt.

S3, molding and cooling the impregnated continuous long glass fibers by a four-roller machine, wherein the temperature of the internal circulating water in the four-roller machine was set as 80 °C, then introducing it into a drawing device for further cooling and trimming, with a drawing speed of 8 m/min; finally, winding into a roll by a winder with a winding speed was 8 m/min.

During the preparation, the rotation speed of the twin-screw extruder and the winding speed of the automatic winder were controlled to ensure that the weight part ratio of the continuous long glass fiber and the polyamide resin 12 composition was 61: 39. The prepared continuous long glass fiber reinforced polyamide 12 composite material was a unidirectional prepreg tape with performance parameters shown in Table 1.

Continuous fiber reinforced long-carbon-chain polyamide composite material unidirectional prepreg tapes of Examples 1-14 and Comparative Examples 1-3 were tested for performance according to the following test methods: (1) Surface density: ASTM 792-98; (2) Fiber content: ASTM D5630; (3) Tensile strength: ASTM D3039; (4) Tensile modulus: ASTM D3039; (5) Elongation at break: ASTM D3039. The results are shown in Table 1.

**Table 1**

| Items | Thick/mm | Surface density (g/m²) | Fiber content /% | Tensile strength /MPa | Tensile modulus /GPa | Elongation at break /% |
|---|---|---|---|---|---|---|
| Example1 | 0.32 | 437 | 60.2 | 879 | 32 | 2.9 |
| Example2 | 0.31 | 443 | 62.3 | 943 | 34 | 2.8 |
| Example3 | 0.31 | 472 | 67.5 | 1108 | 37 | 2.9 |
| Example4 | 0.33 | 468 | 65.2 | 1054 | 35 | 3.4 |
| Example5 | 0.32 | 454 | 63.1 | 972 | 35 | 3.2 |
| Example6 | 0.32 | 461 | 65.5 | 1086 | 35 | 3.1 |
| Example7 | 0.31 | 432 | 60.8 | 893 | 33 | 2.8 |
| Example8 | 0.23 | 312 | 55.4 | 1524 | 87 | 3.1 |
| Examples | 0.25 | 341 | 51.7 | 1432 | 85 | 2.6 |
| Example 10 | 0.23 | 309 | 54.1 | 1508 | 86 | 2.8 |
| Example11 | 0.21 | 295 | 59.3 | 1694 | 94 | 2.7 |
| Example 12 | 0.23 | 337 | 58.6 | 1576 | 91 | 2.8 |
| Example 13 | 0.21 | 318 | 62.7 | 1725 | 95 | 2.9 |
| Example14 | 0.23 | 329 | 56.4 | 1537 | 89 | 2.7 |
| Comparative Example 1 | 0.32 | 457 | 63.6 | 763 | 32 | 3.1 |
| Comparative Example 2 | 0.25 | 321 | 50.8 | 1326 | 95 | 2.9 |
| Comparative Example 3 | 0.33 | 455 | 61.4 | 794 | 31 | 3.2 |

As can be seen from Table 1, Examples 1-7 are polyamide composite materials with different long-carbon-chain containing continuous long glass fibers, with tensile strength of above 850MPa, tensile modulus of above 30GPa, and elongation at break of 2.8-3.4%. Examples 8-14 are polyamide composite materials with different long-carbon-chain containing continuous long carbon fibers, with tensile strength of above 1400MPa, tensile modulus of above 80GPa, and elongation at break of 2.6-3.1%. The mechanical properties of PA6 composite materials composited with continuous long glass fibers and continuous long carbon fibers of Comparative Example 1 and Comparative Example 2, respectively, are inferior to corresponding Examples with similar fiber content. Similarly, the mechanical properties of the continuous long glass fiber reinforced polyamide 12 composite material obtained in Comparative Example 3 is also inferior to the corresponding Examples with similar fiber content. Overall, the Examples of the invention have excellent mechanical properties, and the long carbon chain polyamides of the invention all use pentanediamine from biological sources, which has high carbon content and effectively reduces the use of fossil materials, thereby reducing carbon emissions.

## Claims

1. A long-carbon-chain polyamide resin composition comprising the following components in parts by weight: 81.8-99.8 parts of a long-carbon-chain bio-based polyamide 5X resin, 0.2-1.6 parts of an antioxidant, 0-0.8 parts of a lubricant, 0-15 parts of a compatilizer and 0-0.8 parts of a coupling agent.

2. The long-carbon-chain polyamide resin composition according to claim 1, wherein the long-carbon-chain bio-based polyamide 5X resin is selected from one or more of PA510, PA511, PA512, PA513, PA514, PA515, PA516, PA517 and PA518;
and/or, the long-carbon-chain bio-based polyamide 5X resin meets one or more of the following characteristics: a relative viscosity of 1.8-2.7, a terminal amino group content of 42-60 mmol/kg, a melting point of 170-320 °C, and a bio-based content of 43-100%;
and/or, the content of the long-carbon-chain bio-based polyamide 5X resin is 90-95 parts.

3. The long-carbon-chain polyamide resin composition according to claim 1, wherein the antioxidant is selected from one or more of hindered phenol antioxidants, hindered amine antioxidants and phosphite ester antioxidants; preferably a combination of the hindered amine-based antioxidants and the phosphite-based antioxidants;
preferably, the antioxidant is selected from one or more of Antioxidant 168, Antioxidant 1098, Antioxidant 1010 and Antioxidant S9228; more preferably, the antioxidant is a combination of Antioxidant 168 and Antioxidant 1098; the mass ratio of the Antioxidant 168 to the Antioxidant 1098 is preferably 1: 1;
and/or, the content of the antioxidant is 0.4-0.8 parts, for example 0.4, 0.5 or 0.6 parts;
and/or, the lubricant comprises an external lubricant and an internal lubricant; the mass ratio of the external lubricant to the internal lubricant is preferably 1: 1; the external lubricant is, for example, WAXC, the internal lubricant is, for example, WAXE;
and/or the content of the lubricant is 0.1 to 0.8 parts, for example 0.3, 0.4 or 0.5 parts;
and/or, the compatilizer is selected from one or more of polyolefin grafted maleic anhydride compatilizers, polyolefin grafted methacrylic acid compatilizers and rubber elastomer grafted maleic anhydride compatilizers; the polyolefin grafted maleic anhydride compatilizer is preferably PP-g-MAH or POE-g-MAH; the polyolefin grafted methacrylic acid compatibilizer is preferably POE-g-GMA; the rubber elastomer grafted maleic anhydride compatilizer is preferably EPDM-g-MAH;
and/or, the content of the compatibilizer is 3 to 15 parts, e.g., 4, 5, 8, 10 or 12 parts;
and/or, the coupling agent is selected from one or more of silane coupling agents, carbonate coupling agents and aluminate coupling agents; preferably the silane coupling agent, such as coupling agent KH550, coupling agent KH560 or coupling agent KH570;
and/or the content of the coupling agent is 0.1 to 0.8 parts, for example 0.3, 0.4 or 0.5 parts.

4. A continuous fiber reinforced long-carbon-chain polyamide composite material, comprising the long-carbon-chain polyamide resin composition according to any one of claims 1-3 and fibers, wherein the mass percentage of the fibers in the continuous fiber reinforced long-carbon-chain polyamide composite material is 40% -75%.

5. The continuous fiber reinforced long-carbon-chain polyamide composite material according to claim 4, wherein the mass percentage of the fibers in the continuous fiber reinforced long-carbon-chain polyamide composite material is 50-70%;
and/or, the type of the fiber is carbon fiber, glass fiber, basalt fiber or aramid fiber;
and/or, the fibers are continuous long fibers;
preferably, the fibers are continuous long glass fibers; the continuous long glass fiber has a monofilament diameter of 8-15 µm; and/or the linear density of the continuous long glass fibers is preferably 1000-3600 Tex;
preferably, the fibers are continuous long carbon fibers; the continuous long carbon fibers are preferably polyacrylonitrile carbon fibers; the number of monofilaments of the continuous long carbon fiber is 20000-30000; and/or the monofilament diameter of the continuous long carbon fiber may be 5-10 µm;
and/or, the continuous fiber reinforced long-carbon-chain polyamide composite is in the form of a unidirectional prepreg tape;
and/or, the thickness of the continuous fiber reinforced long-carbon-chain polyamide composite is 0.15-0.5 mm;
and/or, when the fibers are continuous long glass fibers, the continuous fiber reinforced long-carbon-chain polyamide composite meets one or more of the following parameters:a tensile strength of 800-1300 MPa, preferably 850-1200 MPa; a tensile modulus of 30-50 GPa, preferably 30- 40 GPa; an elongation at break is 2.8-3.4%;
and/or, when the fibers are continuous long carbon fibers, the continuous fiber reinforced long-carbon-chain polyamide composite a tensile strength of 1400-1800 MPa; a tensile modulus of 80-100 GPa; and/or an elongation at break of2.6-3.1%.

6. A preparation method of the continuous fiber reinforced long-carbon-chain polyamide composite material according to claim 4 or 5, comprising the following steps:
S1, extruding the long-carbon-chain polyamide resin composition, and allowing the extruded melt to enter an impregnation die;
S2, introducing the fibers into the impregnation die to impregnate the fibers with the melt;
S3, molding, cooling, drawing and winding the impregnated fibers to obtain the continuous fiber reinforced long-carbon-chain polyamide composite material;
wherein, the mass percentage of the continuous fibers in the continuous fiber reinforced polyamide composite material is controlled to be 40%-75% by adjusting the speed of the extruding and the speed of the winding.

7. The preparation method of the continuous fiber reinforced long-carbon-chain polyamide composite material according to claim 6, wherein the mass percentage of the fibers in the continuous fiber reinforced long-carbon-chain polyamide composite material is 50-70%;
and/or, in step S1, the extruding is carried out by a twin-screw extruder or a single-screw extruder, preferably the twin-screw extruder; wherein, the aspect ratio of the twin-screw extruder is 1: 36;
and/or, in step S1, the extruding temperature is 170-340 °C;
preferably, when the twin-screw extruder is used, the twin-screw extruder adopts an eight-zone heating mode, and the temperatures of the first zone to the eighth zone are 195-250 °C, 255-300 °C, 255-300 °C, 255-300 °C, 255-300 °C, 255-300 °C, and 275-310 °C in sequence;
and/or, in the step S1, expressed by screw speed, the extruding speed is 200-600 rpm;
and/or, in the step S1, the step of filtering is preferably carried out after extruding, and the filtering is carried out by a melt filter; preferably, when the twin-screw extruder is used, the temperature of the melt filter is in the range of 0-15 °C above and below the eighth zone temperature of the twin-screw extruder;
and/or, in the step S1, the width of the impregnation die is 100-650 mm;
and/or, in the step S1, the temperature of the impregnation die is 260-330 °C; preferably, when the twin-screw extruder is used, the temperature of the impregnation die is in the range of 0-15 °C above and below the eighth zone temperature of the twin-screw extruder.

8. The preparation method of the continuous fiber reinforced long-carbon-chain polyamide composite material according to claim 6, wherein in the step S2, when the fiber is continuous long fiber, the introducing comprises the following steps: unwinding the fibers from the yarn-passing guide by a tension controller, passing through a yarn splitting frame, spreading the fibers in the yarn spreading system, preheating the fibers in the yarn drying device, and soaking in the impregnation die; when the fibers are continuous long glass fibers, the temperature of the yarn drying device is preferably 70-90 °C, such as 80 °C, or 85 °C; when the fibers are continuous long carbon fibers, the temperature of the yarn drying device is preferably 70-400 °C, for example 80 °C, 100 °C, 250 °C, 300 °C, or 350 °C;
and/or, in the step S3, the molding and cooling are carried out by a roller press, preferably a four-roller press; the temperature of the internal circulating water of the four-roll machine is preferably 60-90 ° C;
and/or, in the step S3, the drawing is carried out by a drawing device, and further cooling and trimming are carried out in the drawing device; the drawing speed of the drawing is preferably 5-15 m/min;
and/or, in the step S3, the winding is carried out by a winding device, preferably an automatic winder.

9. A molded article, comprising the continuous fiber reinforced long-carbon-chain polyamide composite material according to claim 4 or 5.

10. Use of the continuous fiber reinforced long-carbon-chain polyamide composite material according to claim 4 or 5 in fields of aerospace, military, automotive materials, sports equipment, building materials, electronic appliances.
